# EUROPEAN PATENT SPECIFICATION

(11) **EP 1 942 547 B1**
(45) Date of publication and mention of the grant of the patent: **12.05.2010**
(21) Application number: 06822070.6
(22) Date of filing: 23.10.2006
(51) Int. Cl.: H01M 10/30, H01M 2/16, H01M 4/32, H01M 4/38, H01M 4/52, H01M 4/62

(54) **NICKEL-METAL HYDRIDE BATTERY**
NICKEL-METALLHYDRID-BATTERIE
ACCUMULATEUR A HYDRURE METALLIQUE DE NICKEL

(30) Priority: 28.10.2005 JP 2005314494; 28.09.2006 JP 2006264612
(43) Date of publication of application: 09.07.2008
(73) Proprietor: SANYO ELECTRIC CO., LTD., Moriguchi-shi, Osaka 570-8677 (JP)
(72) Inventor: IZUMI, Koji, Moriguchi-shi, Osaka 570-8677 (JP); MAEDA, Taishi, c/o Sanyo Electric Co., Ltd., Moriguchi-shi, Osaka 570-8677 (JP)
(74) Representative: Glawe, Delfs, Moll
(86) International application number: PCT/JP2006/321059
(87) International publication number: WO 2007/049557

(56) References cited:
- JP-A- 09 139 230
- JP-A- 10 326 613
- JP-A- 2002 343 328
- JP-A- 2004 296 299

## Description

### Technical Field

The present invention relates to a nickel-metal hydride rechargeable cell.

### Background Art

Nickel-metal hydride rechargeable cells are used for various purposes because of their high capacity. On the other hand, the nickel-metal hydride rechargeable cells are easy to decrease in remaining capacity due to self-discharge, and occasionally, they have to be freshly recharged when used some time after being charged.

In order to remedy the problem associating with self-discharge, for example, the nickel-metal hydride rechargeable cell disclosed in Unexamined Japanese Patent Publication No. 62-115657 uses as a separator a nonwoven fabric that is made from a sulfonated polyolefin-based resin.

The nickel-metal hydride rechargeable cell with the separator described in the publication, however, does not sufficiently suppress the self-discharge.

### Disclosure of the Invention

It is an object of the present invention to provide a nickel-metal hydride rechargeable cell in which self-discharge is suppressed for a long period.

The inventors have arrived at the invention after conducting various studies over and over to achieve the above object.

The invention provides a nickel-metal hydride rechargeable cell having an electrode assembly accommodated in a container together with an alkaline electrolyte. The electrode assembly is formed by winding a positive plate, a negative plate and a separator. The positive plate includes nickel hydroxide particles, a coating layer that coats at least a part of a surface of each of the nickel hydroxide particles and includes a cobalt compound as a base, in which an average valence of cobalt is more than bivalent, and an additive that is distributed between the nickel hydroxide particles and contains Nb-based particles and Y-based particles. The negative plate includes hydrogen storage alloy with a cobalt content of 2.0 percent by mass or less. The separator includes fiber having a sulfo group. The alkaline electrolyte contains sodium hydroxide as a base for a solute.

The nickel-metal hydride rechargeable cell of the invention is capable of suppressing self-discharge for a long period by synergistic effect of the constituents mentioned above without reducing a cycle life property, as compared to conventional nickel-metal hydride rechargeable cells. Once recharged, the cell of the invention does not need to be recharged before being put to use even some time after charge. Accordingly, the cell is convenient for the user and yet environmentally friendly as the unnecessary power consumption caused by self-discharge is reduced.

### Brief Description of the Drawings

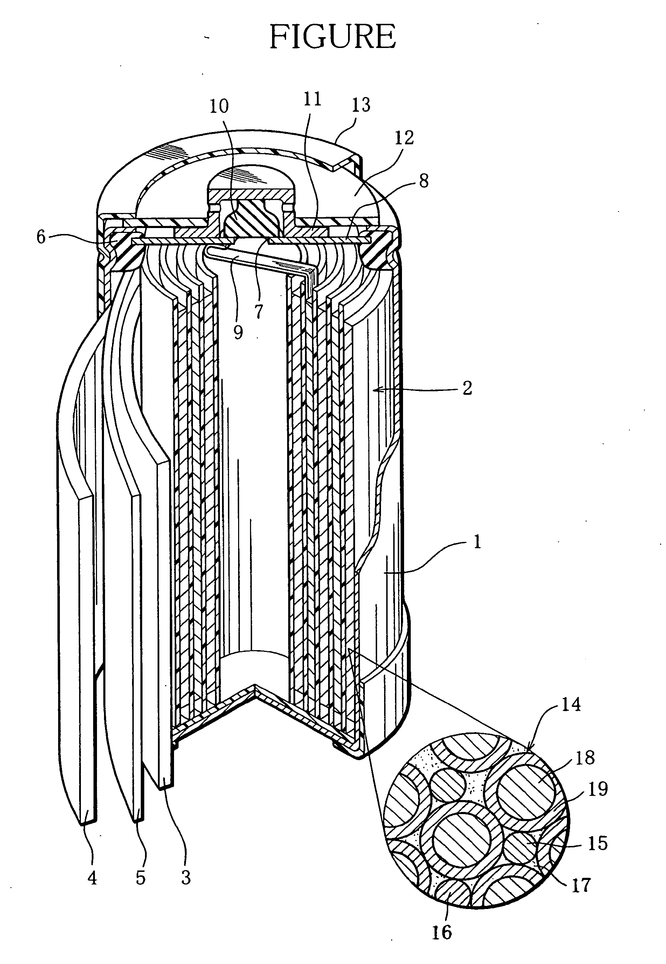

The Figure is a perspective view of a nickel-metal hydride rechargeable cell according to one aspect of the invention, partially broken away, and illustrates in a circle a cross-section schematically showing a part of a positive electrode in an enlarged scale.

### Best Mode of Currying out the Invention

The Figure shows a nickel-metal hydride rechargeable cell according to one aspect of the present invention.

The cell has an exterior can 1 in a shape of a circular cylinder with a bottom. An electrode assembly 2 is accommodated in the exterior can 1 together with an alkaline electrolyte, not shown. The electrode assembly 2 is produced by winding a positive plate 3, a negative plate 4, and a separator 5 into a spiral-wound configuration so that the separator 5 is sandwiched between the plates 3 and 4. An outer end of the negative plate 4 is positioned in an outermost circumference of the electrode assembly 2 as viewed into a spiral direction. The negative plate 4 is electrically connected to an inner circumferential wall of the exterior can 1.

A circular cover plate 8 having a vent hole 7 in the center thereof is set inside an open end of the exterior can 1 through a ring-like insulating gasket 6. The insulating gasket 6 and the cover plate 8 are fastened by caulking an open end edge of the exterior can 1. Between the positive plate 3 of the electrode assembly 2 and an inner surface of the cover plate 8, there is disposed a positive lead 9 that electrically connects the positive plate 3 and the cover plate 8. A rubber valve element 10 is positioned to an outer surface of the cover plate 8 so as to close the vent hole 7. A cylindrical positive terminal 11 with a flange is attached onto the outer surface of the cover plate 8, encircling the valve element 10.

An annular insulating plate 12 is placed on the open end edge of the exterior can 1. The positive terminal 11 extends through and protrudes from the insulating plate 12. Reference numeral 13 represents an exterior tube. The exterior tube 13 covers an outer circumferential edge of the insulating plate 12, an outer circumferential surface of the exterior can 1, and an outer circumferential edge of a bottom wall of the exterior can 1.

The positive plate 3, the negative plate 4, the separator 5, and the alkaline electrolyte will be described below in detail.

The positive plate 3 is constituted by a conductive positive substrate and a positive mix that is carried by the positive substrate.

The positive substrate is a porous substrate having a three-dimensional network structure. For example, a nickel porous body may be applied as the positive substrate. The nickel porous body is obtained by nickel-coating a sponge used as a three-dimensional network material and then roasting this nickel-coated sponge.

The positive mix contains composite particles 14 containing nickel hydroxide as a base (major component) which serves as a positive active material, Nb-based particles 15 containing niobium as a base, Y-based particles 16 containing yttrium as a base, and a binding agent 17.

More specifically, each of the composite particles 14 has a center (core) made of a nickel hydroxide particle 18 in a substantially globular shape. The nickel hydroxide particle 18 may be a solid solution containing either one or both of cobalt and zinc. The nickel hydroxide of the nickel hydroxide particle 18 may be high-order nickel hydroxide in which an average valence of nickel is more than bivalent.

The nickel hydroxide particle 18 has a surface that is entirely or at least partially coated with a coating layer 19 containing a cobalt compound as a base. The cobalt compound included in the coating layer 19 is a high-order cobalt compound consisting of cobalt oxide or cobalt hydroxide in which an average valence of cobalt is more than bivalent. The cobalt compound of the coating layer 19 may contain an alkali cation, such as Na, K, and Li. The cobalt compound may also have a distorted crystal structure.

As the Nb-based particle 15, for example, a particle of metallic niobium or niobium compound may be applied. Applicable niobium compounds include Nb₂O₅, NbF₅, etc.

As the Y-based particle 16, for example, metal or an yttrium compound may be applied. The yttrium compound may be Y₂O₃, YF₃ or the like.

Instead of using the Nb-based particle 15 and the Y-based particle 16, it is possible to use a particle of a compound containing both niobium and yttrium as a base. In short, what is important is that an additive containing niobium and yttrium is distributed between the composite particles 14.

Materials that may be applied as the binding agent 17 include, for example, carboxymethyl cellulose, methyl cellulose, PTFE dispersion, HPC dispersion, etc.

The positive plate 3 may be fabricated, for example, in the following manner. First, a positive slurry is prepared by mixing and kneading the composite particles 14, the Nb-based particles 15, the Y-based particles 16, the binding agent 17 and water. Subsequently, the positive slurry is applied to and filled into the positive substrate. The positive substrate is pressed and cut after the positive slurry is dried, to thereby obtain the positive plate 3.

The composite particle 14. is made, for example, by subjecting the nickel hydroxide particle 18 coated with a cobalt compound to alkali/heat treatment.

To be more concrete, the alkali/heat treatment sprays an alkaline solution onto the nickel hydroxide particle 18 coated with the cobalt compound while stirring in a heating atmosphere. This makes the cobalt compound coating the nickel hydroxide particle 18 into a high-order cobalt compound.

As a result of the alkali/heat treatment, the crystal structure of the cobalt compound forming the coating layer 19 becomes distorted, and the cobalt compound comes to contain an alkali cation, such as Li, Na and K, in accordance with the kind of the alkaline solution.

The negative plate 4 is constituted by a conductive negative substrate and a negative mix that is carried by the negative substrate. For example, a punching metal may be applied as the negative substrate.

The negative mix contains hydrogen storage alloy particles, a binding agent, and if necessary, a conductive agent. As to the binding agent, it is possible to use the same binding agent as the one used in the positive mix. The binding agent may also be used in combination with, for example, sodium polyacrylate. For example, carbon powder may be applied as the conductive agent.

The hydrogen storage alloy particles of the negative plate 4 are made of hydrogen storage alloy with a cobalt content of 2.0 percent by mass or less. Applicable alloys include a rear earth-Mg-Ni-based hydrogen storage alloy having a Ce₂Ni₇-type structure or a structure similar thereto and a LaNi-based hydrogen storage alloy having an AB₅-type structure.

The negative plate 4 may be fabricated, for example, in the following manner. A first step is to prepare a negative slurry that is made of hydrogen storage alloy particles, a binding agent, water, and if necessary, a conductive agent. Secondly, the negative slurry is applied onto the negative substrate. The negative substrate is pressed and cut after the negative slurry is dried, to thereby obtain the negative plate 4.

The separator 5 is made of a nonwoven fabric including chiefly of polyolefin-based synthetic resin fibers that are provided with a sulfo group (-SO₃H). Synthetic resins applicable as the polyolefin-based synthetic resin include polyethylene, polypropylene, etc. The sulfo group is provided by treating the nonwoven fabric with acid containing a sulfate group such as sulfuric acid, fuming sulfuric acid or the like.

The alkaline electrolyte is a Na-rich caustic alkali solution containing sodium-hydroxide (NaOH) as a base of a solute. One liter of the alkaline electrolyte preferably contains potassium hydroxide ranging from 0 gram equivalent to 1 gram equivalent, NaOH ranging from 5 gram equivalent to 7 gram equivalent, and lithium hydroxide (LiOH) ranging from 0.3 gram equivalent to 1.3 gram equivalent.

In the above-described nickel-metal hydride rechargeable cell, the average valence of the cobalt contained in the cobalt compound of the coating layer 19 is more than bivalent, and the Nb-based particles 15 and the Y-based particles 16 are distributed between the composite particles 14. The hydrogen storage alloy of the negative plate 4 contains cobalt of 2.0 percent by mass or less, and the separator 5 includes the fibers having the sulfo group. Moreover, the alkaline electrolyte contains NaOH as a base of the solute. Consequently, albeit for unknown reasons, the nickel-metal hydride rechargeable cell has a very excellent self-discharge property. In short, the cell makes it possible to effectively suppress the self-discharge for a long period when left charged.

### [Embodiment]

### Embodiment 1

### 1. Fabrication of the negative plate

Metal materials were weighed and mixed so that composition is La_{0.10}Ce_{0.05}Pr_{0.35}Nd_{0.50}Mg_{0.10}Ni_{3.70}A_{0.22}. This mixture was melted in a highfrequency melting furnace and cast into an ingot. This ingot was heated for 10 hours in an argon atmosphere having a temperature of 1000 degrees centigrade, to thereby make a crystal structure of the ingot into a Ce₂Ni₇-type structure or a structure similar thereto. Subsequently, the ingot was mechanically pulverized and sieved in an inert atmosphere, to thereby obtain rare-earth-Mg-Ni-based hydrogen storage alloy particles having the above composition. The rare-earth-Mg-Ni-based hydrogen storage alloy particles that had been obtained had an average particle diameter of 50µm. The average particle diameter was defined as a particle diameter corresponding to 50 percent in weight integration in the particle diameter distribution of the rare-earth-Mg-Ni-based hydrogen storage alloy particles that was measured with a laser diffraction/scattering particle size distribution analyzer.

The obtained alloy particles of 100 parts by mass were kneaded after being added with sodium polyacrylate of 0.5 parts by mass, carboxymethyl cellulose of 0.12 parts by mass, PTFE dispersion (dispersion media: water; specific gravity 1.5; solid content of 60 percent by mass) of 0.5 parts by mass (in terms of solid content), carbon black of 1.0 parts by mass, and water of 30 parts by mass, to thereby prepare a negative slurry. The negative slurry was then applied onto a punching sheet made of nickel. After the negative slurry was dried, the punching sheet was pressed and cut. In this manner, a negative plate for an AA-size cell was fabricated.

### 2. Fabrication of the positive plate

A mixed solution of nickel sulfate, zinc sulfate, and cobalt sulfate was prepared so that a mass ratio of Ni, Zn and Co is 96:3:1 in reduced quantity. Sodium hydroxide was gradually added into the mixed solution, stirring constantly, to induce a reaction. At the same time, the mixed solution in the process of the reaction was maintained in a range of from 13 to 14 in pH. Nickel hydroxide particles of a substantially spherical shape were consequently precipitated in the mixed solution.

In the next place, cobalt sulfate solution was added into the mixed solution in which the nickel hydroxide particles were precipitated, to thereby cause a reaction. At the same time, the mixed solution in the process of the reaction was maintained in a range of from 9 to 10 in pH. In this way, cobalt hydroxide was precipitated in surfaces of the substantially spherical nickel hydroxide particles that had been previously precipitated. The substantially spherical nickel hydroxide particles whose surfaces were coated with the cobalt hydroxide were rinsed three times with ten parts purified water. The particles were then dehydrated and dried. Consequently, nickel hydroxide particles whose surfaces were coated with cobalt hydroxide were obtained.

Thereafter, the obtained particles were subjected to alkali/heat treatment. More specifically, the nickel hydroxide particles whose surfaces were coated with cobalt hydroxide were constantly stirred in a heating atmosphere having a temperature of 100 degrees centigrade, and were simultaneously sprayed with sodium hydroxide solution having a concentration of 25 percent by mass for 0.5 hours. As a result, the cobalt hydroxide coating the nickel hydroxide particles was oxidized and turned into a high-order cobalt compound.

The particles that had subjected to the alkali/heat treatment were rinsed three times with ten parts purified water. The particles were subsequently dehydrated and dried. This provided composite particles that were nickel hydroxide particles whose surfaces were coated with respective coating layers made of a high-order cobalt compound having a distorted crystal structure and containing an alkali cation.

The next step was to mix the composite particles of 100 parts by mass, diniobium pentoxide (Nb₂O₅) powder of 0.3 parts by mass, diyttrium trioxide (Y₂O₃) powder of 0.9 parts by mass, and HPC (hydroxypropylcellulose) dispersion liquid (dispersion media: water of 40 parts by mass and solid content of 60 parts by mass) of 0.3 parts by mass so that the composite particles, the Nb₂O₅ powder, and the Y₂O₃ powder were evenly dispersed. Accordingly, a positive slurry was obtained. The positive slurry was filled into a nickel porous body. After the positive slurry was dried, the nickel porous body was pressed and cut, to thereby fabricate a non-sintered positive plate for an AA-size cell.

### 3. Fabrication of the separator

A nonwoven fabric was prepared, which was made of polypropylene resin fibers, and was 45 g/m² in basis weight (areal weight) and 0.2 mm in thickness. The nonwoven fabric was subjected to sulfonation treatment using fuming sulfuric acid. This provided a separator having a sulfo group.

### 4. Alkaline electrolyte preparation

A Na-rich alkaline electrolyte was prepared by mixing potassium hydroxide (KOH) solution, sodium hydroxide (NaOH) solution, and lithium hydroxide (LiOH) solution. The solutions were mixed together in such a ratio that one liter of the alkaline electrolyte contained 0.5 gram equivalent of potassium hydroxide, 6.0 gram equivalent of sodium hydroxide, and 1.0 gram equivalent of lithium hydroxide.

### 5. Fabrication of the nickel-metal hydride rechargeable cell

The obtained positive and negative plates and separator were wound into a spiral-wound configuration so that the separator was sandwiched between the plates, to thereby fabricate an electrode assembly. The obtained electrode assembly was accommodated into an exterior can, and a predetermined affixing process was carried out. The Na-rich alkaline electrolyte was then injected into the exterior can. The open end of the exterior can was sealed with a cover plate, etc. In this manner, a sealed cylindrical nickel-metal hydride rechargeable cell of AA-size according to Embodiment 1 was fabricated. Comparative Examples 1 to 5

As shown in TABLE 1, a nickel-metal hydride rechargeable cell was fabricated in the same manner as in Embodiment 1, except for one or more modifications described under the following items (i) to (vi).
(i) The nickel hydroxide particles coated with the cobalt compound were not subjected to the alkali/heat treatment, and the average valence of cobalt contained in the cobalt compound of the coating layer was set to bivalent.
(ii) The Nb₂O₅ powder and the Y₂O₃ powder were not added into the positive slurry.
(iii) The CoO powder of 1.9 parts by mass was added into the positive slurry.
(iv) The negative plate was made using hydrogen storage alloy having a composition of Mm_{1.0}Ni_{3.65}Co_{0.75}Mn_{0.35}Al_{0.30}.
(v) The nonwoven fabric was subjected to fluorine gas treatment instead of the sulfonation treatment. The fluorine gas treatment is to process a nonwoven fabric with a mixed gas obtained by adding oxygen gas, CO₂ gas, sulfur gas, and the like, into fluorine gas that is diluted with inert gas.
(vi) As the alkaline electrolyte, K-rich alkaline electrolyte was used instead of the Na-rich alkaline electrolyte. To be concrete, KOH solution, NaOH solution and LiOH solution were mixed together at such a ratio that one liter of the alkaline electrolyte contains 6.0 gram equivalent of potassium hydroxide, 1.0 gram equivalent of sodium hydroxide, and 0.2 gram equivalent of lithium hydroxide.

### 6. Evaluation of capacity retention rates of the cells

The cells of Embodiment 1 and Comparative Examples 1 to 5, which had been subjected to initial activation treatment were charged at a charging current of 1 ItA in a differential voltage control mode in an environment having a temperature of 25 degrees centigrade. After a 60-minute quiescent period following the charging, each of the cells was discharged at a discharging current of 740 mA, and then a discharging capacity was measured as a full charge capacity.

### (1) Capacity retention rate (40 °C for 3 months)

Each of the cells, which had been discharged to measure a full charge capacity, was charged at a charging current of 1 ItA in a differential voltage control mode in an environment having a temperature of 25 degrees centigrade. After the charged cells were left to stand at a temperature of 40 degrees centigrade for three months, each of the cells was discharged at a discharging current of 740 mA in an environment having a temperature of 25 degrees centigrade. Then a discharging capacity was measured as a remaining capacity. A rate of the remaining capacity in relation to the full charge capacity is shown in TABLE 1 under Capacity retention rate (90 °C for 3 months).

### (2) Capacity retention rate (25 °C for 1 year)

Each of the cells, which had been discharged to measure a full charge capacity, was charged at a charging current of 1 ItA in a differential voltage control mode in an environment having a temperature of 25 degrees centigrade. After the charged cells were left to stand at a temperature of 25 degrees centigrade for one year (360 days), each of the cells was discharged at a discharging current of 740 mA in an environment having a temperature of 25 degrees centigrade. Then a discharging capacity was measured as a remaining capacity. A rate of the remaining capacity in relation to the full charge capacity is shown in TABLE 1 as a capacity retention rate (25 °C for 1 year).

**[TABLE 1]**

| | Positive plate | | | Negative plate | Separator | Electrolyte | Cell evaluation | |
|---|---|---|---|---|---|---|---|---|
| | Average valence of Co in the coating layer | Nb₂O₅ powder and Y₂O₃ powder | CoO powder | Presence of Co in hydrogen storage alloy | Pre-processing | | Capacity retention rate (40°C for 3 months) (%) | Capacity retention rate (25°C for 1 year) (%) |
| Embodiment 1 | More than bivalent | Added | Not added | Not present | Sulfonation | Na-rich | 81.5 | 84.1 |
| Comparative example 1 | Bivalent | Not added | Added | Present | Fluorine gas | K-rich | 0.0 | 0.0 |
| Comparative example 2 | More than bivalent | Added | Added | Present | Fluorine gas | K-rich | 21.8 | 23.0 |
| Comparative example 3 | Bivalent | Not added | Not added | Not present | Fluorine gas | K-rich | 26.4 | 28.0 |
| Comparative example 4 | Bivalent | Not added | Added | Present | Sulfonation | K-rich | 53.8 | 55.7 |
| Comparative example 5 | Bivalent | Not added | Added | Present | Fluorine gas | Na-rich | 59.9 | 62.2 |

TABLE 1 clearly shows the following facts.

The cell of Embodiment 1 is excellent in terms of capacity retention rate, as compared to the cells of Comparative Examples 1 to 5. This is because, in the cell of Embodiment 1, the average valence of the cobalt contained in the cobalt compound of the coating layer is more than bivalent; the positive slurry is not added with the CoO powder but with the Nb₂O₅ powder and the Y₂O₃ powder; the hydrogen storage alloy of the negative plate does not contain Co of more than 2.0 percent by mass; the separator is subjected to the sulfonation treatment; and the alkaline electrolyte is Na-rich.

The invention is not limited to the one aspect and the embodiment thereof, and may be modified in various ways. The cell may be square in shape. There is no particular restriction to a mechanical structure of the cell.

According to the one aspect, the positive plate 3 includes the Nb-based particles 15 and the Y-based particles 16 as additives distributed between the composite particles 14. However, the positive plate 3 may include additives of other kinds. If the positive plate 3 includes particles containing Co as additive, it is preferable that the Co contained in the additive should have a mass of 0.1 percent or less of the mass of the nickel.hydroxide contained in the positive plate 3. This is because, if the mass of the Co contained in the additive is more than 0.1 percent of the mass of the nickel hydroxide contained in the positive plate 3, the cell is deteriorated in self-discharge property.

## Claims

1. A nickel-metal hydride rechargeable cell having an electrode assembly accommodated in a container together with an alkaline electrolyte, wherein
the electrode assembly is formed by winding a positive plate, a negative plate, and a separator, wherein
the positive plate includes:
nickel hydroxide particles;
a coating layer coating at least a part of a surface of each of the nickel hydroxide particles and including a cobalt compound as a base, an average valence of cobalt in the cobalt compound being more than bivalent, and
an additive distributed between the nickel hydroxide particles and containing Nb-based particles and Y-based particles, wherein
the negative plate includes hydrogen storage alloy with a cobalt content of 2.0 percent by mass or less, wherein
the separator includes fiber having a sulfo group, and wherein
the alkaline electrolyte contains sodium hydroxide as a base for a solute.

2. The nickel-metal hydride rechargeable cell according to claim 1, wherein
the Nb-based particles contained in the additive contain at least one kind selected from the group including metal Nb, Nb₂O₅, and NbF₅.

3. The nickel-metal hydride rechargeable cell according to claim 1 or 2, wherein
the Y-based particles contained in the additive include at least one kind selected from a group including metal Y, Y₂O₃, and YF₃.

4. The nickel-metal hydride rechargeable cell according to any one of claims 1 to 3, wherein
one liter of the alkaline electrolyte contains potassium hydroxide ranging from 0 gram equivalent to 1 gram equivalent, NaOH ranging from 5 gram equivalent to 7 gram equivalent, and lithium hydroxide (LiOH) ranging from 0.3 gram equivalent to 1.3 gram equivalent.

5. The nickel-metal hydride rechargeable cell according to any one of claims 1 to 4, wherein
the additive further contains Co, and the Co contained in the additive has a mass of 0.1 percent or less in relation to the mass of the nickel hydroxide contained in the positive plate.

6. The nickel-metal hydride rechargeable cell according to any one of claims 1 to 5, wherein
the amount of the Nb-based particles contained in the additive is less than the amount of the Y-based particles contained in the additive.

## Patentansprüche

1. Wiederaufladbare Nickelmetallhydridzelle mit einer Elektrodenanordnung, die in einem Behälter zusammen mit einem alkalischen Elektrolyten aufgenommen ist, wobei
die Elektrodenanordnung gebildet ist durch Wickeln einer positiven Platte, einer negativen Platte und eines Separators, wobei
die positive Platte einschließt:
Nickeihydroxid-Partikel;
eine Beschichtungsschicht, die mindestens einen Teil einer Oberfläche von jedem Nickelhydroxid-Partikel beschichtet und eine Kobaltverbindung als eine Basis einschließt, wobei die durchschnittliche Wertigkeit des Kobalts in der Kobaltverbindung mehr als zweiwertig ist, und
ein Additiv, das zwischen den Nickelhydroxid-Partikeln verteilt ist und Nbbasierte Partikel und Y-basierte Partikel enthält, wobei
die negative Platte eine Wasserstoffspeicherlegierung mit einem Kobaltgehalt von 2,0 Massenprozent oder weniger einschließt, wobei
der Separator Faser mit einer Sulfo-Gruppe einschließt, und wobei
der alkalische Elektrolyt Natriumhydroxid als eine Basis für eine gelöste Substanz enthält.

2. Wiederaufladbare Nickelmetallhydridzelle gemäß Anspruch 1, wobei die Nb-basierten Partikel, die in dem Additiv enthalten sind, mindestens eine Art ausgewählt aus der Gruppe umfassend metallisches Nb, Nb₂O₅ und NbF₅ enthalten.

3. Wiederaufladbare Nickelmetallhydridzelle gemäß Anspruch 1 oder 2, wobei die Y-basierten Partikel, die in dem Additiv enthalten sind, mindestens eine Art ausgewählt aus einer Gruppe umfassend metallisches Y, Y₂O₃ und YF₃ einschließen.

4. Wiederaufladbare Nickelmetallhydridzelle gemäß einem der Ansprüche 1 bis 3, wobei ein Liter des alkalischen Elektrolyten Kaliumhydroxid in einem Bereich von 0 Grammäquivalent bis 1 Grammäquivalent, NaOH in einem Bereich von 5 Grammäquivalent bis 7 Grammäquivalent und Lithiumhydroxid (LiOH) in einem Bereich von 0,3 Grammäquivalent bis 1,3 Grammäquivalent enthält.

5. Wiederaufladbare Nickelmetallhydridzelle gemäß einem der Ansprüche 1 bis 4, wobei
das Additiv weiter Co enthält, und das Co, das in dem Additiv enthalten ist, eine Masse von 0,1 Prozent oder weniger bezogen auf die Masse des Nickelhydroxids, das in der positiven Platte enthalten ist, aufweist.

6. Wiederaufladbare Nickelmetallhydridzelle gemäß einem der Ansprüche 1 bis 5, wobei
die Menge der Nb-basierten Partikel, die in dem Additiv enthalten sind, weniger als die Menge der Y-basierten Partikel, die in dem Additiv enthalten sind, ist.

## Revendications

1. Pile rechargeable à hydrure métallique de nickel possédant un assemblage d'électrode logé dans un bac avec un électrolyte alcalin, dans laquelle
l'assemblage d'électrode est formé par le bobinage d'une plaque positive, d'une plaque négative et d'un séparateur, où
la plaque positive comprend :
des particules d'hydroxyde de nickel ;
une couche de revêtement recouvrant au moins une partie d'une surface de chacune des particules d'hydroxyde de nickel et comprenant un composé de cobalt en tant que base, une valence moyenne du cobalt dans le composé de cobalt étant plus que bivalente, et
un additif distribué entre les particules d'hydroxyde de nickel et contenant des particules à base de Nb et des particules à base de Y, dans laquelle
la plaque négative comprend un alliage de stockage d'hydrogène ayant une teneur en cobalt de 2,0 pour cent en poids ou moins, dans laquelle
le séparateur comprend des fibres ayant un groupe sulfo, et dans laquelle
l'électrolyte alcalin contient de l'hydroxyde de sodium en tant que base pour un soluté.

2. Pile rechargeable à hydrure métallique de nickel selon la revendication 1, dans laquelle
les particules à base de Nb contenues dans l'additif contiennent au moins un type choisi dans le groupe comprenant le Nb métallique, Nb₂O₅ et NbF₅.

3. Pile rechargeable à hydrure métallique de nickel selon la revendication 1 ou 2, dans laquelle
les particules à base de Y contenues dans l'additif comprennent au moins un type choisi dans un groupe comprenant le Y métallique, Y₂O₃ et YF₃.

4. Pile rechargeable à hydrure métallique de nickel selon l'une quelconque des revendications 1 à 3, dans laquelle
un litre de l'électrolyte alcalin contient 0 équivalent gramme à 1 équivalent gramme d'hydroxyde de potassium, 5 équivalents grammes à 7 équivalents grammes de NaOH et 0,3 équivalent gramme à 1,3 équivalent gramme d'hydroxyde de lithium (LiOH).

5. Pile rechargeable à hydrure métallique de nickel selon l'une quelconque des revendications 1 à 4, dans laquelle
l'additif contient en outre du Co, et le Co contenu dans l'additif possède une masse de 0,1 pour cent ou moins par rapport à la masse de l'hydroxyde de nickel contenu dans la plaque positive.

6. Pile rechargeable à hydrure métallique de nickel selon l'une quelconque des revendications 1 à 5, dans laquelle
la quantité de particules à base de Nb contenues dans l'additif est inférieure à la quantité de particules à base de Y contenues dans l'additif.
